# EUROPÄISCHE PATENTSCHRIFT

(11) **EP 2 842 814 B1**
(45) Veröffentlichungstag und Bekanntmachung des Hinweises auf die Patenterteilung: **06.06.2018**
(21) Anmeldenummer: 14001310.3
(22) Anmeldetag: 10.04.2014
(51) Int. Cl.: B60R 16/033, B62D 53/00, B60L 11/12

(54) **Fahrzeuganhänger**
Vehicle trailer
Remorque pour véhicule

(30) Priorität: 29.08.2013 DE 102013014305
(43) Veröffentlichungstag der Anmeldung: 04.03.2015
(73) Patentinhaber: MAN Truck & Bus AG, 80995 München (DE)
(72) Erfinder: Kerschl, Stefan, 85402 Kranzberg (DE); von Esebeck, Götz, 15831 Mahlow (DE)
(74) Vertreter: v. Bezold & Partner Patentanwälte - PartG mbB

(56) Entgegenhaltungen:
- WO-A1-2010/002644
- WO-A1-2013/092223
- DE-A1-102010 056 179
- DE-A1-102011 083 216
- US-A1- 2011 100 735
- US-A1- 2011 253 463
- US-B1- 7 338 335
- US-B1- 8 004 242

## Beschreibung

Die Erfindung betrifft einen Fahrzeuganhänger für ein Zugfahrzeug, insbesondere einen Sattelauflieger oder einen Deichselanhänger. Die Erfindung betrifft ferner ein Fahrzeuggespann mit einem Zugfahrzeug und einen Fahrzeuganhänger.

Aus dem Stand der Technik sind Nutzfahrzeuge (z.B. Lastkraftwagen) bekannt, die ein elektrisches Antriebssystem aufweisen, das von einem in das Nutzfahrzeug integrierten Akkumulator mit elektrischer Energie versorgt wird. Nachteilig daran ist zum einen die beschränkte Kapazität des Akkumulators und die dementsprechend begrenzte Reichweite des Nutzfahrzeugs. Ein weiterer Nachteil der bekannten Nutzfahrzeuge mit einem elektrischen Antriebssystem ist die Tatsache, dass derartige Nutzfahrzeuge meist nur auf einen Betrieb ohne einen Anhänger ausgelegt sind, was bei einem Betrieb mit einem Anhänger zu entsprechenden Problemen führt.

WO 2013/092223 A1 und DE 10 2010 056 179 A1 offenbaren einen Fahrzeuganhänger gemäß dem Oberbegriff von Anspruch 1. Allerdings enthalten die Fahrzeuganhänger hierbei kein eigenes Elektroaggregat. Ferner ist zum Stand der Technik hinzuweisen auf US 2011/253 463 A1, WO 2010/002 644 A1 und US 7 338 335 B1.

Der Erfindung liegt deshalb die Aufgabe zugrunde, die vorstehend genannten Nachteile mindestens teilweise zu beseitigen.

Diese Aufgabe wird durch einen erfindungsgemäßen Fahrzeuganhänger gemäß dem Hauptanspruch gelöst.

Die Erfindung umfasst die allgemeine technische Lehre, in einen Fahrzeuganhänger (z.B. Sattelauflieger oder Deichselanhänger) eine elektrische Antriebssystemkomponente (z.B. einen Akkumulator) zu integrieren, die mit einem elektrischen Antriebssystem des Zugfahrzeugs koppelbar ist. Beim Ankoppeln des Fahrzeuganhängers an das Zugfahrzeug wird also zum einen in herkömmlicher Weise eine mechanische Verbindung zwischen dem Zugfahrzeug und dem Fahrzeuganhänger hergestellt. Darüber hinaus wird dabei auch eine elektrische Verbindung hergestellt zwischen dem elektrischen Antriebssystem in dem Zugfahrzeug einerseits und der in den Fahrzeuganhänger integrierten elektrischen Antriebssystemkomponente andererseits.

In einem bevorzugten Ausführungsbeispiel der Erfindung weisen die in den Fahrzeuganhänger integrierten Antriebssystemkomponenten einen elektrischen Energiespeicher auf, der zur Stromversorgung des elektrischen Antriebssystems des Zugfahrzeugs mit dem elektrischen Antriebssystem des Fahrzeuganhängers gekoppelt werden kann. Beispielsweise kann der elektrische Energiespeicher einen Akkumulator (z.B. Lithium-Ionen-Akkumulator) oder eine Brennstoffzelle aufweisen. Der elektrische Energiespeicher in dem Fahrzeuganhänger unterstützt also den elektrischen Energiespeicher in dem Zugfahrzeug, wodurch die Reichweite des gesamten Fahrzeuggespanns vergrößert wird. Die Aufteilung des Energiespeichersystems auf einem elektrischen Energiespeicher in dem Zugfahrzeug und einen elektrischen Energiespeicher in dem Fahrzeuganhänger ist auch fahrzeugdynamisch vorteilhaft, da auf diese Weise eine gleichmäßigere Gewichtsverteilung erreicht wird. Darüber hinaus ermöglicht der Energiespeicher in dem Fahrzeuganhänger auch einen Stand-Alone-Betrieb des Fahrzeuganhängers im abgekoppelten Zustand, beispielsweise zur Versorgung von Elektroaggregaten (z.B. Elektromotor zum Antrieb eines Kältekompressors, eines Schubbodens oder einer Ladebordwand).

In dem bevorzugten Ausführungsbeispiel der Erfindung weist der in den Fahrzeuganhänger integrierte elektrische Energiespeicher einen Hochvoltspeicher und einen Niedervoltspeicher auf. Der im Rahmen der Erfindung verwendete Begriff eines Hochvoltspeichers bezieht sich vorzugsweise auf Energiespeicher mit einer Nennspannung von mehr als 60V. Der im Rahmen der Erfindung verwendete Begriff eines Niedervoltspeichers bezieht sich dagegen vorzugsweise auf Energiespeicher mit einer Nennspannung von weniger als 60V.

Zur elektrischen Verbindung der in den Fahrzeuganhänger integrierten Antriebssystemkomponenten mit dem elektrischen Antriebssystem des Zugfahrzeugs weist der Fahrzeuganhänger eine erste Schnittstelle auf. Darüber hinaus kann der Fahrzeuganhänger zusätzlich eine zweite Schnittstelle aufweisen, wenn an den Fahrzeuganhänger ein weiterer Fahrzeuganhänger angehängt werden kann, wobei die zweite Schnittstelle dann eine elektrische Verbindung herstellen kann zu den Antriebssystemkomponenten in dem weiteren Fahrzeuganhänger. Die Erfindung ist also auch realisierbar bei Fahrzeuggespannen mit mehreren Fahrzeuganhängern (z.B. sogenannte "Road Trains" oder "Long Combination Vehicle"), die hintereinander gekoppelt sind, wobei jeder Fahrzeuganhänger des Fahrzeuggespanns integrierte Antriebssystemkomponenten (z.B. Akkumulatoren) aufweisen kann. Gemäß der Erfindung weisen die Schnittstellen eine Leistungsschnittstelle und eine Kommunikationsschnittstelle auf, wobei die Leistungsschnittstelle zur Übertragung elektrischer Energie dient, während die Kommunikationsschnittstelle zur Datenübertragung dient.

Darüber hinaus gehört zu den in dem Fahrzeuganhänger integrierten Antriebssystemkomponenten ein Verteiler, um elektrische Energie verteilen zu können. Beispielsweise können an den Verteiler die erste Schnittstelle und/oder die zweite Schnittstelle angeschlossen sein, um elektrische Energie zwischen dem elektrischen Antriebssystem in dem Zugfahrzeug und dem oder den Antriebssystemkomponenten in dem oder den Fahrzeuganhängern verteilen zu können. Vorzugsweise ist deshalb auch der Energiespeicher in dem Fahrzeuganhänger an den Verteiler angeschlossen. Darüber hinaus kann an den Verteiler auch ein Elektroaggregat (z.B. Elektromotor zum Antrieb eines Kältekompressors, eines Schubbodens oder einer Ladebordwand) angeschlossen sein, damit das Elektroaggregat in dem Fahrzeuganhänger von dem in den Fahrzeuganhänger integrierten Energiespeicher mit Strom versorgt werden kann.

Hierbei besteht auch die Möglichkeit, dass der Verteiler eine Isolationsüberwachung oder eine Interlock-Überwachung durchführt, wobei diese Funktionen an sich aus dem Stand der Technik bekannt sind und deshalb nicht näher beschreiben werden müssen.

Ferner weist der Fahrzeuganhänger vorzugsweise einen ersten Gleichspannungswandler auf, der zwischen dem in den Fahrzeuganhänger integrierten Energiespeicher und der ersten Schnittstelle angeordnet ist, insbesondere zwischen dem Energiespeicher und dem Verteiler.

Bei der vorstehend beschriebenen Erfindungsvariante mit einem Hochvoltspeicher und einem Niedervoltspeicher sind der Hochvoltspeicher und der Niedervoltspeicher vorzugsweise durch jeweils einen Gleichspannungswandler mit dem Verteiler verbunden.

Die Versorgung des zusätzlichen Elektroaggregats (z.B. Elektromotor zum Antrieb eines Kältekompressors, eines Schubbodens oder einer Ladebordwand) erfolgt dagegen vorzugsweise durch einen Wechselrichter, der zwischen dem Verteiler und dem Elektroaggregat angeordnet ist.

Darüber hinaus weist der Fahrzeuganhänger vorzugsweise eine integrierte Steuereinheit auf, um die in den Fahrzeuganhänger integrierten Antriebssystemkomponenten zu steuern. Beispielsweise kann die integrierte Steuereinheit die Aufladung bzw. Entladung des integrierten Energiespeichers steuern. Weiterhin kann die integrierte Steuereinheit den Energiefluss über die erste Schnittstelle zu dem Zugfahrzeug und/oder über die zweite Schnittstelle zu dem weiteren Fahrzeuganhänger steuern. Darüber hinaus besteht im Rahmen der Erfindung die Möglichkeit, dass die integrierte Steuereinheit den Gleichspannungswandler bzw. den Wechselrichter steuert. Allgemein lässt sich sagen, dass die integrierte Steuereinheit ein Energiemanagement in dem Fahrzeuganhänger steuern kann.

Weiterhin ist zu erwähnen, dass die Erfindung nicht nur Schutz beansprucht für den vorstehend beschriebenen erfindungsgemäßen Fahrzeuganhänger mit einer integrierten Antriebssystemkomponente. Vielmehr beansprucht die Erfindung auch Schutz für ein Fahrzeuggespann mit einem Zugfahrzeug und einem entsprechend gestalteten Fahrzeuganhänger.

Das Zugfahrzeug weist vorzugsweise eine Steuereinheit auf, um das Energiemanagement des elektrischen Antriebssystems des Zugfahrzeugs zu steuern. Darüber hinaus kann die in dem Zugfahrzeug befindliche Steuereinheit auch das Energiemanagement der Antriebssystemkomponenten in dem Fahrzeuganhänger steuern.

Eine Möglichkeit hierzu besteht darin, dass die Steuereinheit in dem Zugfahrzeug als Master-Steuereinheit die Steuereinheit in den Fahrzeuganhänger steuert, die dann als Slave-Steuereinheit arbeitet.

Eine andere Möglichkeit besteht darin, dass in dem Fahrzeuganhänger selbst keine Steuereinheit für das Energiemanagement angeordnet ist, so dass die Steuereinheit in dem Zugfahrzeug im angekoppelten Zustand des Fahrzeuganhängers auch das Energiemanagement in dem Fahrzeuganhänger steuert, so dass auf eine separate Steuereinheit in dem Fahrzeuganhänger verzichtet werden kann.

Ferner ist zu erwähnen, dass das elektrische Antriebssystem des Zugfahrzeugs vollelektrisch oder teilelektrisch arbeiten kann. Beispielsweise kann das elektrische Antriebssystem in dem Zugfahrzeug einen Hybridantrieb aufweisen, der sowohl einen Verbrennungsmotor als auch einen Elektromotor aufweist. Es besteht jedoch im Rahmen der Erfindung auch die Möglichkeit, dass das elektrische Antriebssystem des Zugfahrzeugs vollelektrisch arbeitet, d.h. mit einem Elektromotor, aber ohne einen Verbrennungsmotor. Darüber hinaus sind auch verschiedene weitere Varianten eines elektrischen Antriebssystems möglich, was jedoch für die Erfindung nicht von besonderer Bedeutung ist und deshalb nicht näher beschrieben werden muss.

Es ist jedoch zu erwähnen, dass der Fahrzeuganhänger selbst vorzugsweise keinen eigenen Antrieb aufweist, sondern von dem Zugfahrzeug gezogen wird.

Weiterhin ist zu erwähnen, dass der Energiespeicher in dem Fahrzeuganhänger vorzugsweise eine so große Kapazität aufweist, dass er zu einer nennenswerten Reichweitenvergrößerung führt. Die Kapazität des Energiespeichers in dem Fahrzeuganhänger umfasst deshalb vorzugsweise mindestens 10%, 20%, 50% oder sogar 100% der Kapazität des Energiespeichers in dem Zugfahrzeug. Dadurch unterscheidet sich der erfindungsgemäße Fahrzeuganhänger auch von herkömmlichen Fahrzeuganhängern, die lediglich eine Hilfsbatterie aufweisen, die jedoch mit dem elektrischen Antriebssystem des Zugfahrzeugs nicht gekoppelt werden kann und aufgrund ihrer geringen Kapazität auch zur Unterstützung eines elektrischen Antriebssystems nicht geeignet wäre.

Schließlich ist noch zu erwähnen, dass die Erfindung nicht beschränkt ist auf Nutzfahrzeuge, wie beispielsweise Lastkraftwagen (z.B. Sattelzüge mit einer Sattelzugmaschine und einem Sattelauflieger, Lastzüge mit einem ziehenden Lastkraftwagen und einem Deichselanhänger) oder Omnibusse. Vielmehr kann die Erfindung allgemein bei Straßenfahrzeugen und Radfahrzeugen (z.B. PKW mit einem Anhänger) eingesetzt werden.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: ein Fahrzeuggespann, bestehend aus einer Zugmaschine und einem Sattelauflieger, wobei in den Sattelauflieger elektrische Antriebssystemkomponenten integriert sind,
- Figur 2: eine Abwandlung von Figur 1 mit einem vollelektrischen Antrieb der Zugmaschine ohne einen Verbrennungsmotor, sowie
- Figur 3: ein Fahrzeuggespann mit einem Zugfahrzeug und zwei Deichselanhängern, wobei die Deichselanhänger jeweils integrierte Antriebssystemkomponenten aufweisen.

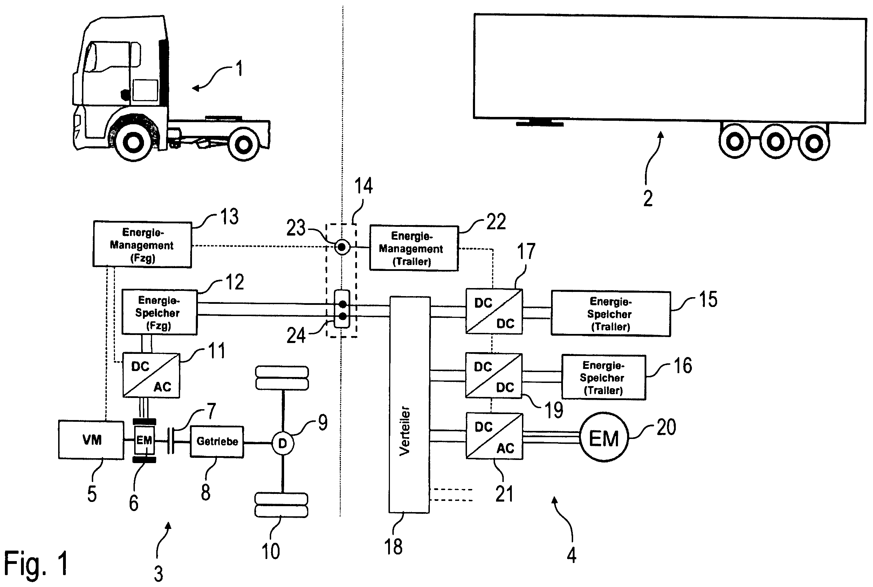

Figur 1 zeigt ein bevorzugtes Ausführungsbeispiel der Erfindung in Form eines Fahrzeuggespanns, das aus einer Zugmaschine 1 und einem Sattelauflieger 2 besteht, wobei die Zugmaschine 1 ein elektrisches Antriebssystem 3 aufweist, das mit Antriebssystemkomponenten 4 in dem Sattelauflieger 2 gekoppelt werden kann und im Betrieb zusammenarbeitet.

Das elektrische Antriebssystem 3 in der Zugmaschine 1 weist einen Verbrennungsmotor 5 (z.B. Dieselmotor) und einen Elektromotor 6 auf, die in einem gemeinsamen Antriebsstrang über eine Kupplung 7 und ein Getriebe 8 auf ein Differential 9 einer angetriebenen Achse 10 wirken und dadurch die Zugmaschine 1 antreiben. Die Erfindung ist jedoch nicht auf die dargestellte Achskonfiguration beschränkt. So kann die Zugmaschine 1 auch eine größere Anzahl von Achsen aufweisen, die nicht alle angetrieben sein müssen.

Der Elektromotor 6 wird über einen Wechselrichter 11 aus einem elektrischen Energiespeicher 12 (z.B. Lithium-Ionen-Akku) mit elektrischer Energie versorgt.

Darüber hinaus weist das elektrische Antriebssystem 3 in der Zugmaschine 1 eine Steuereinheit 13 auf, die mit dem Wechselrichter 11 und mit dem Verbrennungsmotor 5 sowie mit einer Schnittstelle 14 verbunden ist, wobei die Steuereinheit 13 das Energiemanagement des elektrischen Antriebssystems 3 steuert.

Die in den Sattelauflieger 2 integrierten Antriebssystemkomponenten 4 umfassen einen Hochvoltspeicher 15 und einen Niedervoltspeicher 16, wobei der Hochvoltspeicher 15 über einen Gleichspannungswandler 17 mit einem Verteiler 18 verbunden ist, während der Niedervoltspeicher 16 über einen weiteren Gleichspannungswandler 19 mit dem Verteiler 18 verbunden ist.

Darüber hinaus weist der Sattelauflieger 2 ein Elektroaggregat 20 auf, wobei es sich beispielsweise um einen Elektromotor zum Antrieb eines Kältekompressors, eines Schubbodens oder einer Ladebordwand handeln kann. Das Elektroaggregat 20 ist über einen Gleichrichter 21 ebenfalls mit dem Verteiler 18 verbunden.

Weiterhin umfassen die in den Sattelauflieger 2 integrierten Antriebssystemkomponenten 4 eine Steuereinheit 22, die das Energiemanagement in dem Sattelauflieger 2 steuert.

Die beiden Steuereinheiten 13, 22 sind über eine Kommunikationsschnittstelle 23 in der Schnittstelle 14 miteinander verbunden. Hierbei besteht die Möglichkeit, dass die Steuereinheit 13 in der Zugmaschine 1 im gekoppelten Zustand als Master-Steuereinheit arbeitet und über die Kommunikationsschnittstelle 23 die Steuereinheit 22 in dem Sattelauflieger 2 steuert, wobei die Steuereinheit 22 in dem Sattelauflieger dann als Slave-Steuereinheit arbeitet.

Darüber hinaus umfasst die Schnittstelle 14 noch eine Leistungsschnittstelle 24, die den Energiespeicher 12 in der Zugmaschine 1 mit dem Verteiler 18 in dem Sattelauflieger 2 verbindet und einen Energiefluss zwischen der Zugmaschine 1 und dem Sattelauflieger 2 ermöglicht und zwar vorzugsweise bidirektional.

Zum einen kann das elektrische Antriebssystem 3 in der Zugmaschine 1 also über die Leistungsschnittstelle 24 den Hochvoltspeicher 15 und/oder den Niedervoltspeicher 16 in dem Sattelauflieger 2 aufladen.

Zum anderen kann der Elektromotor 6 in der Zugmaschine 1 aber auch aus dem Hochvoltspeicher 15 in dem Sattelauflieger 2 mit Strom versorgt werden, was zu einer entsprechenden Erhöhung der maximal möglichen Reichweite beiträgt.

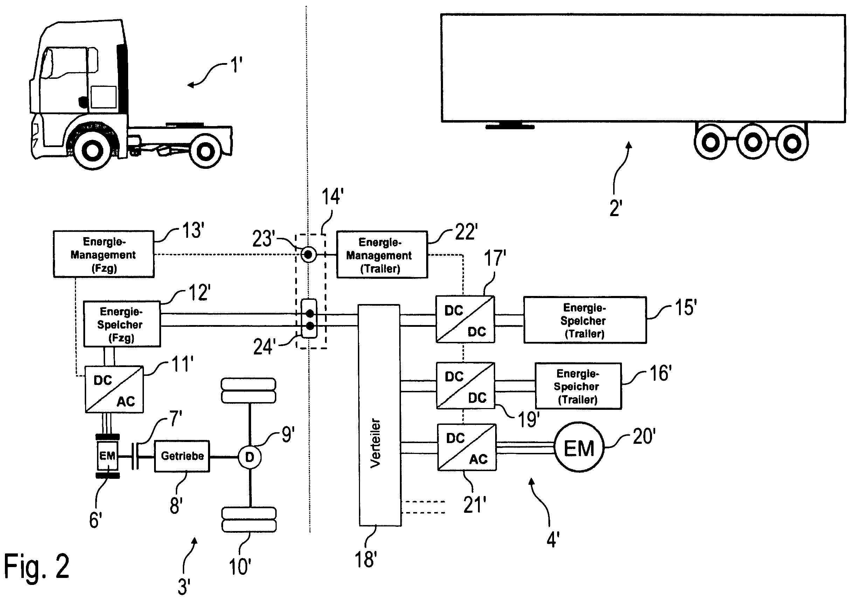

Das Ausführungsbeispiel gemäß Figur 2 stimmt weitgehend mit dem vorstehend beschriebenen und in Figur 1 dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden, die jedoch zur Unterscheidung mit einem Apostroph gekennzeichnet sind.

Eine Besonderheit dieses Ausführungsbeispiels besteht darin, dass das elektrische Antriebssystem 3' der Zugmaschine 1' vollelektrisch ausgeführt ist, so dass auf den Verbrennungsmotor 5 gemäß Figur 1 verzichtet werden kann.

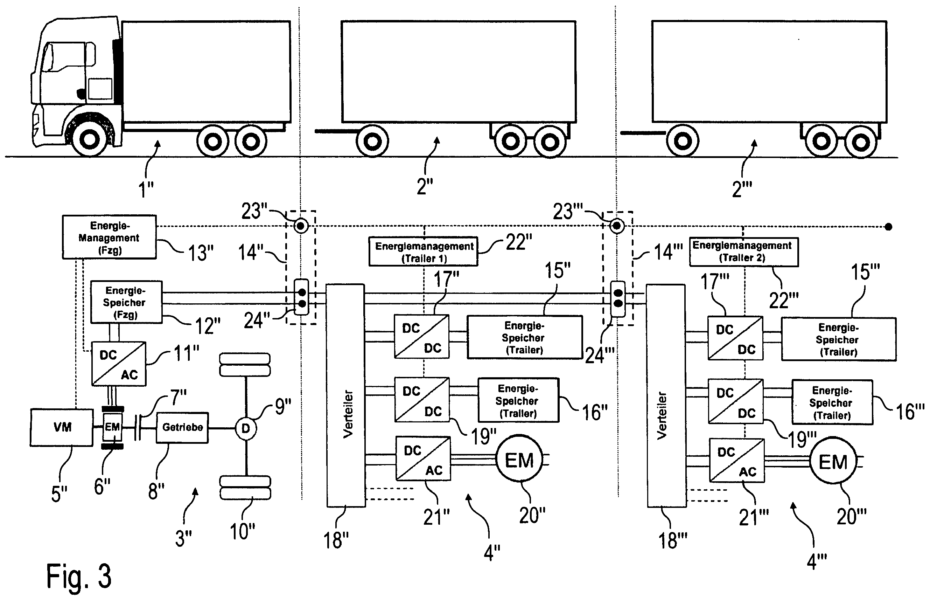

Auch das Ausführungsbeispiel gemäß Figur 3 stimmt weitgehend mit dem Ausführungsbeispiel gemäß Figur 1 überein, so dass zur Vermeidung von Wiederholungen auf die vorstehende Beschreibung verwiesen wird, wobei für entsprechende Einzelheiten dieselben Bezugszeichen verwendet werden, die jedoch zur Unterscheidung mit zwei Apostrophen gekennzeichnet sind.

Eine Besonderheit dieses Ausführungsbeispiels besteht darin, dass das Fahrzeuggespann von einem dreiachsigen Lastkraftwagen 1" gezogen wird anstelle der Zugmaschine 1 gemäß Figur 1.

Eine weitere Besonderheit dieses Ausführungsbeispiels besteht darin, dass der Lastkraftwagen 1" einen dreiachsigen Deichselanhänger 2" zieht anstelle des Sattelaufliegers 2 gemäß Figur 1.

Darüber hinaus ist zu erwähnen, dass an den Deichselanhänger 2" ein weiterer Deichselanhänger 2'" angehängt ist.

Schließlich ist noch zu erwähnen, dass auch in den zweiten Deichselanhänger 2'" Antriebssystemkomponenten 4'" integriert sind.

Die Antriebssystemkomponenten 4'" in dem zweiten Deichselanhänger 2"' sind über eine entsprechende Schnittstelle 14'" mit den Antriebssystemkomponenten 4" in dem ersten Deichselanhänger 2" verbunden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1, 1': Zugmaschine
- 1": Lastkraftwagen
- 2, 2': Sattelauflieger
- 2", 2'": Deichselanhänger
- 3, 3', 3": Elektrisches Antriebssystem
- 4, 4', 4", 4"': Antriebssystemkomponenten
- 5, 5": Verbrennungsmotor
- 6, 6', 6": Elektromotor
- 7, 7', 7": Kupplung
- 8, 8', 8": Getriebe
- 9, 9', 9": Differential
- 10, 10', 10": Angetriebene Achse
- 11, 11', 11": Wechselrichter
- 12; 12', 12": Energiespeicher
- 13, 13', 13": Steuereinheit
- 14, 14', 14", 14'": Schnittstelle
- 15, 15', 15": Hochvoltspeicher
- 16, 16', 16": Niedervoltspeicher
- 17, 17', 17": Gleichspannungswandler
- 18, 18', 18", 18'": Verteiler
- 19, 19', 19": Gleichspannungswandler
- 20, 20', 20": Elektroaggregat
- 21, 21', 21": Gleichrichter
- 22, 22', 22", 22"': Steuereinheit
- 23, 23', 23", 23'": Kommunikationsschnittstelle
- 24, 24', 24", 24'": Leistungsschnittstelle

## Patentansprüche

1. Fahrzeuganhänger (2; 2'; 2"; 2"') für ein Zugfahrzeug (1; 1'; 1"), insbesondere Sattelauflieger (2; 2') oder Deichsel-Anhänger (2", 2'"), mit
a) mindestens einer in den Fahrzeuganhänger (2; 2'; 2"; 2"') integrierten elektrischen Antriebssystemkomponente (4; 4'; 4"; 4"'), die mit einem elektrischen Antriebssystem (3; 3'; 3") zum Antrieb des Zugfahrzeugs (1; 1'; 1") koppelbar ist,
b) wobei die in den Fahrzeuganhänger (2; 2'; 2"; 2"') integrierte Antriebssystemkomponente (4; 4'; 4"; 4"') einen elektrischen Energiespeicher (15, 16; 15', 16'; 15", 16"; 15"', 16"') aufweist, der zur Stromversorgung des elektrischen Antriebssystems (3; 3'; 3") des Zugfahrzeugs (1; 1'; 1") mit dem elektrischen Antriebssystem (3; 3'; 3") des Zugfahrzeugs (1; 1'; 1") koppelbar ist, **dadurch gekennzeichnet, dass**
c) der Energiespeicher (15, 16; 15', 16'; 15", 16"; 15"', 16"') in dem Fahrzeuganhänger (2; 2'; 2"; 2"') einen Stand-Alone-Betrieb des Fahrzeuganhängers (2; 2'; 2"; 2'") im abgekoppelten Zustand ermöglicht zur Versorgung eines Elektroaggregats (20; 20'; 20"; 20"') in dem Fahrzeuganhänger (2; 2'; 2"; 2"'), weiter **gekennzeichnet durch**,
d) eine erste Schnittstelle (14; 14'; 14") zur elektrischen Verbindung der Antriebssystemkomponente (4; 4'; 4"; 4"') in dem Fahrzeuganhänger (2; 2'; 2") mit dem elektrischen Antriebssystem (3; 3'; 3") des Zugfahrzeugs (1; 1'; 1"), und/oder eine zweite Schnittstelle (14"') zur elektrischen Verbindung der Antriebssystemkomponente (4") in dem Fahrzeuganhänger (2") mit einer weiteren Antriebssystemkomponente (4"') in einem weiteren Fahrzeuganhänger (2'"), wobei die erste Schnittstelle (14; 14'; 14") und/oder die zweite Schnittstelle (14"') jeweils eine Leistungsschnittstelle (24; 24'; 24"; 24'") und eine Kommunikationsschnittstelle (23; 23'; 23"; 23"') umfasst, wobei die Leistungsschnittstelle (24; 24'; 24"; 24"') zur Übertragung elektrischer Energie dient, während die Kommunikationsschnittstelle (23; 23'; 23"; 23'") zur Datenübertragung dient, wobei die in den Fahrzeuganhänger (2; 2'; 2"; 2"') integrierte Antriebssystemkomponente (4; 4'; 4"; 4'") einen Verteiler (18; 18'; 18"; 18"') aufweist, der elektrische Energie verteilt zwischen dem elektrischen Antriebssystem (3; 3'; 3") in dem Zugfahrzeug (1; 1'; 1") über die erste Schnittstelle (14; 14'; 14"), der Antriebssystemkomponente (4; 4'; 4"; 4"') in dem weiteren Fahrzeuganhänger (2'") über die zweite Schnittstelle (14'"), dem Energiespeicher (15, 16; 15', 16'; 15", 16"; 15"', 16"') in dem Fahrzeuganhänger (2; 2'; 2"; 2"') und/oder dem Elektroaggregat (20; 20'; 20"; 20"') in dem Fahrzeuganhänger (2; 2'; 2"; 2"').

2. Fahrzeuganhänger (2; 2'; 2"; 2"') nach Anspruch 1, **dadurch gekennzeichnet, dass** der elektrische Energiespeicher (15, 16; 15', 16'; 15", 16"; 15"', 16"') ein wiederaufladbarer Akkumulator ist.

3. Fahrzeuganhänger (2; 2'; 2"; 2"') nach Anspruch 2, **dadurch gekennzeichnet,**
a) **dass** der in den Fahrzeuganhänger (2; 2'; 2"; 2"') integrierte Energiespeicher (15, 16; 15', 16'; 15", 16"; 15"', 16"') einen Hochvoltspeicher (15; 15'; 15"; 15'") mit einer Nennspannung von mehr als 60V aufweist, und/oder
b) **dass** der in den Fahrzeuganhänger (2; 2'; 2"; 2'") integrierte Energiespeicher (15, 16; 15', 16'; 15", 16"; 15"', 16"') einen Niedervoltspeicher (16; 16'; 16"; 16"') mit einer Nennspannung von weniger als 60V aufweist.

4. Fahrzeuganhänger (2; 2'; 2"; 2"') nach einem der vorhergehenden Ansprüche, **dadurch gekennzeichnet, dass** die in den Fahrzeuganhänger (2; 2'; 2"; 2'") integrierten Antriebssystemkomponenten (4; 4'; 4"; 4'") einen Verteiler (18; 18'; 18"; 18'") aufweisen, der elektrische Energie verteilt zwischen:
- dem Hochvoltspeicher (15; 15'; 15"; 15'") in dem Fahrzeuganhänger (2; 2'; 2"; 2"'), und/oder
- dem Niedervoltspeicher (16; 16'; 16"; 16"') in dem Fahrzeuganhänger (2; 2'; 2"; 2'").

5. Fahrzeuganhänger (2; 2'; 2"; 2"') nach einem der vorhergehenden Ansprüche, **dadurch gekennzeichnet, dass** der Verteiler (18; 18'; 18"; 18'") zusätzlich mindestens eine der folgenden Funktionen ausführt:
a) Isolationsüberwachung,
b) Interlock-Überwachung.

6. Fahrzeuganhänger (2; 2'; 2"; 2"') nach einem der vorhergehenden Ansprüche, **gekennzeichnet durch** einen ersten Gleichspannungswandler (17; 17'; 17") zwischen dem in den Fahrzeuganhänger (2; 2'; 2"; 2'") integrierten Energiespeicher (15, 16; 15', 16'; 15", 16"; 15"', 16'") und der ersten Schnittstelle (14; 14'; 14"), insbesondere zwischen dem Energiespeicher (15, 16; 15', 16'; 15", 16"; 15"', 16'") und dem Verteiler (18; 18'; 18"; 18"').

7. Fahrzeuganhänger (2; 2'; 2"; 2"') nach Anspruch 6, **dadurch gekennzeichnet,**
a) **dass** der erste Gleichspannungswandler (17; 17'; 17"; 17"') zwischen dem Verteiler (18; 18'; 18") und dem Hochvoltspeicher (15; 15'; 15"; 15"') angeordnet ist, und
b) **dass** ein zweiter Gleichspannungswandler (19; 19'; 19"; 19"') zwischen dem Verteiler (18; 18'; 18"; 18'") und dem Niedervoltspeicher (16; 16'; 16"; 16'") angeordnet ist.

8. Fahrzeuganhänger (2; 2'; 2"; 2"') nach einem der vorhergehenden Ansprüche, **dadurch gekennzeichnet, dass** das Elektroaggregat (20; 20'; 20"; 20"') ein Elektromotor zum Antrieb eine Kältekompressors, eines Schubbodens oder einer Ladebordwand ist.

9. Fahrzeuganhänger (2; 2'; 2"; 2'") nach Anspruch 8, **gekennzeichnet durch** einen Wechselrichter (21; 21'; 21"; 21'") zur Stromversorgung des Elektroaggregats (20; 20'; 20"; 20'") mit einem Wechselstrom.

10. Fahrzeuganhänger (2; 2'; 2"; 2"') nach einem der vorhergehenden Ansprüche, **gekennzeichnet durch** eine in den Fahrzeuganhänger (2; 2'; 2"; 2"') integrierte Steuereinheit (22; 22'; 22") zur Steuerung
- der Aufladung des in den Fahrzeuganhänger (2; 2'; 2"; 2"') integrierten Energiespeichers (15, 16; 15', 16'; 15", 16"; 15"', 16"'),
- der Entladung des in den Fahrzeuganhänger (2; 2'; 2"; 2"') integrierten Energiespeichers(15, 16; 15', 16'; 15", 16"; 15"', 16'"),
- des Energieflusses über die erste Schnittstelle (14; 14'; 14"),
- des Energieflusses über die zweite Schnittstelle (14'"),
- des ersten Gleichspannungswandlers (17; 17'; 17"; 17"'),
- des zweiten Gleichspannungswandlers (19; 19'; 19"; 19'"), und/oder
- des Wechselrichters (21; 21'; 21"; 21"').

11. Fahrzeuggespann mit
a) einem Zugfahrzeug (1; 1'; 1") mit einem elektrischen Antriebssystem (3; 3'; 3") zum Antrieb des Zugfahrzeugs (1; 1'; 1"), und
b) mindestens einem Fahrzeuganhänger (2; 2'; 2"; 2'") nach einem der vorhergehenden Ansprüche, wobei der Fahrzeuganhänger (2; 2'; 2"; 2'") mechanisch an das Zugfahrzeug (1; 1'; 1") angekuppelt ist, während das elektrische Antriebssystem (3; 3'; 3") des Zugfahrzeugs (1; 1'; 1") elektrisch mit der Antriebssystemkomponente (4; 4'; 4"; 4"') in dem Fahrzeuganhänger (2; 2'; 2"; 2"') verbunden ist.

12. Fahrzeuggespann nach Anspruch 11, **dadurch gekennzeichnet,**
a) **dass** die Steuereinheit (22; 22'; 22"; 22"') in dem Fahrzeuganhänger (2; 2'; 2"; 2"') das Energiemanagement der elektrischen Antriebssystemkomponenten (4; 4'; 4"; 4'") in dem Fahrzeuganhänger (2; 2'; 2'; 2'") steuert, und
b) **dass** das Zugfahrzeug (1; 1'; 1") eine eigene Steuereinheit (13; 13'; 13") aufweist, die über die erste Schnittstelle (14; 14'; 14") mit der Steuereinheit (22; 22'; 22"; 22"') in dem Fahrzeuganhänger (2; 2'; 2"; 2"') verbunden ist, und
c) **dass** die Steuereinheit (13; 13'; 13") in dem Zugfahrzeug (1; 1'; 1") das Energiemanagement des elektrischen Antriebssystems (3; 3'; 3") des Zugfahrzeugs (1; 1'; 1") steuert, und
d) **dass** die Steuereinheit (13; 13'; 13") in dem Zugfahrzeug (1; 1'; 1") als Master-Steuereinheit die Steuereinheit (22; 22'; 22"; 22"') in dem Fahrzeuganhänger (2; 2'; 2"; 2"') steuert, die als Slave-Steuereinheit arbeit.

13. Fahrzeuggespann nach Anspruch 12, **dadurch gekennzeichnet, dass** das Zugfahrzeug (1; 1'; 1") eine Steuereinheit (13; 13'; 13") aufweist, die über die erste Schnittstelle (14; 14'; 14") mit den Antriebssystemskomponenten (4; 4'; 4"; 4"') in dem Fahrzeuganhänger (2; 2'; 2"; 2'") verbunden ist und das Energiemanagement der Antriebssystemskomponenten (4; 4'; 4"; 4"') in dem Fahrzeuganhänger (2; 2'; 2"; 2'") steuert.

14. Fahrzeuggespann nach einem der Ansprüche 11 bis 13,
**dadurch gekennzeichnet,**
a) **dass** das elektrische Antriebssystem (3; 3'; 3") des Zugfahrzeugs (1; 1'; 1") einen Hybridantrieb aufweist mit einem Verbrennungsmotor (5; 5") und einem Elektromotor (6; 6"), oder
b) **dass** das elektrische Antriebssystem (3') des Zugfahrzeugs (1') einen vollelektrischen Antrieb aufweist mit einem Elektromotor (6'), aber ohne einen Verbrennungsmotor.

15. Fahrzeuggespann nach einem der Ansprüche 11 bis 14, **dadurch gekennzeichnet, dass** der Energiespeicher (15, 16; 15', 16'; 15", 16"; 15"', 16"') in dem Fahrzeuganhänger (2; 2'; 2"; 2"') eine Kapazität von mindestens 10%, 20%, 50% oder 100% der Kapazität eines Energiespeichers (12; 12'; 12") des elektrischen Antriebssystems (3; 3'; 3") in dem Zugfahrzeug (1; 1'; 1") aufweist.

## Claims

1. Vehicle trailer (2; 2'; 2"; 2"') for a tractive unit (1; 1'; 1"), in particular a semitrailer (2; 2') or drawbar trailer (2", 2"'), having
a) at least one electric drive system component (4; 4'; 4"; 4"') which is integrated into the vehicle trailer (2; 2'; 2"; 2"') and which can be coupled to an electric drive system (3; 3'; 3") for driving the tractive unit (1; 1'; 1"),
b) wherein the drive system component (4; 4'; 4"; 4"') which is integrated into the vehicle trailer (2; 2'; 2"; 2"') has an electric energy store (15, 16; 15', 16'; 15", 16"; 15"', 16"') which can be coupled to the electric drive system (3; 3'; 3") of the tractive unit (1; 1'; 1") in order to supply power to the electric drive system (3; 3'; 3") of the tractive unit (1; 1'; 1"), **characterized in that**
c) the energy store (15, 16; 15', 16'; 15", 16"; 15"', 16"') in the vehicle trailer (2; 2'; 2"; 2"') permits stand-alone operation of the vehicle trailer (2; 2'; 2"; 2"') in the unhitched state in order to supply an electric assembly (20; 20'; 20"; 20"') in the vehicle trailer (2; 2'; 2"; 2"'),
further **characterized by**
d) a first interface (14; 14'; 14") for electrically connecting the drive system component (4; 4'; 4"; 4''') in the vehicle trailer (2; 2'; 2") to the electric drive system (3; 3'; 3") of the tractive unit (1; 1'; 1"), and/or a second interface (14''') for electrically connecting the drive system component (4") in the vehicle trailer (2") to a further drive system component (4''') in a further vehicle trailer (2'''), wherein the first interface (14; 14'; 14") and/or the second interface (14''') each comprise a power interface (24; 24'; 24"; 24''') and a communication interface (23; 23'; 23"; 23'''), wherein the power interface (24; 24'; 24"; 24''') serves to transmit electrical energy, while the communication interface (23; 23'; 23"; 23''') serves to transmit data, wherein the drive system component (4; 4'; 4"; 4"') which is integrated into the vehicle trailer (2; 2'; 2"; 2''') has a distributor (18; 18'; 18"; 18''') which distributes electrical energy between the electric drive system (3; 3'; 3") in the tractive unit (1; 1'; 1") via the first interface (14; 14'; 14"), the drive system component (4; 4'; 4"; 4''') in the further vehicle trailer (2''') via the second interface (14'''), the energy store (15, 16; 15', 16'; 15", 16"; 15''', 16''') in the vehicle trailer (2; 2'; 2"; 2''') and/or the electric assembly (20; 20'; 20"; 20''') in the vehicle trailer (2; 2'; 2"; 2''').

2. Vehicle trailer (2; 2'; 2"; 2''') according to Claim 1, **characterized**
**in that** the electric energy store (15, 16; 15', 16'; 15", 16"; 15''', 16''') is a rechargeable accumulator.

3. Vehicle trailer (2; 2'; 2"; 2''') according to Claim 2, **characterized**
a) **in that** the energy store (15, 16; 15', 16'; 15", 16"; 15''', 16''') which is integrated into the vehicle trailer (2; 2'; 2"; 2''') has a high-voltage store (15; 15'; 15"; 15''') with a rated voltage of more than 60V, and/or
b) **in that** the energy store (15, 16; 15', 16'; 15", 16"; 15''', 16''') which is integrated into the vehicle trailer (2; 2'; 2"; 2''') has a low-voltage store (16; 16'; 16"; 16''') with a rated voltage of less than 60V.

4. Vehicle trailer (2; 2'; 2"; 2''') according to one of the preceding claims, **characterized in that** the drive system components (4; 4'; 4"; 4''') which are integrated into the vehicle trailer (2; 2'; 2"; 2''') have a distributor (18; 18'; 18"; 18''') which distributes electrical energy between:
- the high-voltage store (15; 15'; 15"; 15''') in the vehicle trailer (2; 2'; 2"; 2'''), and/or
- the low-voltage store (16; 16'; 16"; 16''') in the vehicle trailer (2; 2'; 2"; 2''').

5. Vehicle trailer (2; 2'; 2"; 2''') according to one of the preceding claims, **characterized in that** the distributor (18; 18'; 18"; 18''') additionally carries out at least one of the following functions:
a) insulation monitoring, and
b) interlock monitoring.

6. Vehicle trailer (2; 2'; 2"; 2''') according to one of the preceding claims, **characterized by** a first direct voltage transformer (17; 17'; 17") between the energy store (15, 16; 15', 16'; 15", 16"; 15''', 16''') integrated into the vehicle trailer (2; 2'; 2"; 2''') and the first interface (14; 14'; 14"), in particular between the energy store (15, 16; 15', 16'; 15", 16"; 15''', 16''') and the distributor (18; 18'; 18"; 18''').

7. Vehicle trailer (2; 2'; 2"; 2''') according to Claim 6, **characterized**
a) **in that** the first direct voltage transformer (17; 17'; 17"; 17''') is arranged between the distributor (18; 18'; 18") and the high-voltage store (15; 15'; 15"; 15'''), and
b) **in that** a second direct voltage transformer (19; 19'; 19"; 19''') is arranged between the distributor (18; 18'; 18"; 18''') and the low-voltage store (16; 16'; 16"; 16''').

8. Vehicle trailer (2; 2'; 2"; 2''') according to one of the preceding claims, **characterized in that** the electric assembly (20; 20'; 20"; 20''') is an electric motor for driving a cooling compressor, a sliding floor or a hydraulic platform.

9. Vehicle trailer (2; 2'; 2"; 2''') according to Claim 8, **characterized by** an inverter (21; 21'; 21"; 21''') for supplying the electric assembly (20; 20'; 20"; 20''') with an alternating current.

10. Vehicle trailer (2; 2'; 2"; 2''') according to one of the preceding claims **characterized by** a control unit (22; 22'; 22") which is integrated into the vehicle trailer (2; 2'; 2"; 2''') and has the purpose of controlling
- the charging of the energy store (15, 16; 15', 16'; 15", 16"; 15''', 16''') which is integrated into the vehicle trailer (2; 2'; 2"; 2'''),,
- the discharging of the energy store (15, 16; 15', 16'; 15", 16"; 15''', 16''') which is integrated into the vehicle trailer (2; 2'; 2"; 2'''),
- the energy flow via the first interface (14; 14'; 14"),
- the energy flow via the second interface (14'''),
- the first direct voltage transformer (17; 17'; 17"; 17'''),
- the second direct voltage transformer (19; 19'; 19"; 19'''), and/or
- the inverter (21; 21'; 21"; 21''').

11. Vehicle combination having
a) a tractive unit (1; 1'; 1") with an electric drive system (3; 3'; 3") for driving the tractive unit (1; 1'; 1"), and
b) at least one vehicle trailer (2; 2'; 2"; 2''') according to one of the preceding claims, wherein the vehicle trailer (2; 2'; 2"; 2''') is mechanicaly coupled to the tractive unit (1; 1'; 1"), while the electric drive system (3; 3'; 3") of the tractive unit (1; 1'; 1") is electrically connected to the drive system component (4; 4'; 4"; 4''') in the vehicle trailer (2; 2'; 2"; 2''').

12. Vehicle combination according to Claim 11,
**characterized**
a) **in that** the control unit (22; 22'; 22"; 22''') in the vehicle trailer (2; 2'; 2"; 2''') controls the energy management of the electric drive system components (4; 4'; 4"; 4''') in the vehicle trailer (2; 2'; 2"; 2"'), and
b) **in that** the tractive unit (1; 1'; 1") has a separate control unit (13; 13'; 13") which is connected via the first interface (14; 14'; 14") to the control unit (22; 22'; 22"; 22''') in the vehicle trailer (2; 2'; 2"; 2'''), and
c) **in that** the control unit (13; 13'; 13") in the tractive unit (1; 1'; 1") controls the energy management of the electric drive system (3; 3'; 3") of the tractive unit (1; 1'; 1"), and
d) **in that** the control unit (13; 13'; 13") in the tractive unit (1; 1'; 1") controls, as a master control unit, the control unit (22; 22'; 22"; 22''') in the vehicle trailer (2; 2'; 2"; 2'''), which operates as a slave control unit.

13. Vehicle combination according to Claim 12, **characterized in that** the tractive unit (1; 1'; 1") has a control unit (13; 13'; 13") which is connected via the first interface (14; 14'; 14") to the drive system components (4; 4'; 4"; 4''') in the vehicle trailer (2; 2'; 2"; 2''') and controls the energy management of the drive system components (4; 4'; 4"; 4''') in the vehicle trailer (2; 2'; 2"; 2''').

14. Vehicle combination according to one of Claims 11 to 13,
**characterized**
a) **in that** the electric drive system (3; 3'; 3") of the tractive unit (1; 1'; 1") has a hybrid drive with an internal combustion engine (5; 5") and an electric motor (6; 6"), or
b) **in that** the electric drive system (3') of the tractive unit (1') has a fully electric drive with an electric motor (6'), but without an internal combustion engine.

15. Vehicle combination according to one of Claims 11 to 14, **characterized in that** the energy store (15, 16; 15', 16'; 15", 16"; 15''', 16''') in the vehicle trailer (2; 2'; 2"; 2''') has a capacity of at least 10%, 20%, 50% or 100% of the capacity of an energy store (12; 12'; 12") of the electric drive system (3; 3'; 3") in the tractive unit (1; 1'; 1").

## Revendications

1. Remorque pour véhicule (2 ; 2' ; 2" ; 2"') destinée à un véhicule tracteur (1 ; 1' ; 1"), en particulier un semi-remorque (2 ; 2") ou une remorque à timon (2", 2'"), comportant
a) au moins un composant de système d'entraînement électrique (4 ; 4' ; 4" ; 4'") intégré dans la remorque pour véhicule (2 ; 2' ; 2" ; 2'"), qui peut être accouplé à un système d'entraînement électrique (3 ; 3' ; 3") pour l'entraînement du véhicule tracteur (1 ; 1' ; 1"),
b) dans lequel le composant de système d'entraînement (4 ; 4' ; 4" ; 4'") intégré dans la remorque pour véhicule (2 ; 2' ; 2" ; 2"') comporte un accumulateur d'énergie électrique (15, 16 ; 15', 16' ; 15", 16" ; 15'", 16'") qui peut être accouplé au système d'entraînement électrique (3 ; 3' ; 3") du véhicule tracteur (1 ; 1' ; 1") pour alimenter en courant le système d'entraînement électrique (3 ; 3' ; 3") du véhicule tracteur (1 ; 1' ; 1"), **caractérisé en ce que**
c) l'accumulateur d'énergie (15, 16 ; 15', 16' ; 15", 16" ; 15"', 16"') dans la remorque pour véhicule (2 ; 2' ; 2" ; 2"') permet un fonctionnement autonome de la remorque pour véhicule (2 ; 2' ; 2" ; 2"') à l'état désaccouplé pour alimenter un groupe électrique (20 ; 20' ; 20" ; 20"') dans la remorque pour véhicule (2 ; 2' ; 2" ; 2'"), **caractérisée en outre par**,
d) une première interface (14 ; 14' ; 14") pour relier électriquement le composant de système d'entraînement (4 ; 4' ; 4" ; 4'") dans la remorque pour véhicule (2 ; 2' ; 2") au système d'entraînement électrique (3 ; 3' ; 3") du véhicule tracteur (1 ; 1' ; 1"), et/ou une seconde interface (14'") pour relier électriquement le composant de système d'entraînement (4") dans la remorque pour véhicule (2") à un autre composant de système d'entraînement (4"') dans une autre remorque pour véhicule (2"'), dans lequel la première interface (14 ; 14' ; 14") et/ou la seconde interface (14"') comprend/comprennent respectivement une interface de puissance (24 ; 24' ; 24" ; 24"') et une interface de communication (23 ; 23' ; 23" ; 23"'), dans lequel l'interface de puissance (24 ; 24' ; 24" ; 24"') sert à la transmission d'énergie électrique, tandis que l'interface de communication (23 ; 23' ; 23" ; 23"') sert à la transmission de données, dans lequel le composant de système d'entraînement (4 ; 4' ; 4" ; 4"') intégré dans la remorque pour véhicule (2 ; 2' ; 2" ; 2"') est muni d'un répartiteur (18 ; 18' ; 18" ; 18"') qui répartit l'énergie électrique entre le système d'entraînement électrique (3 ; 3' ; 3") dans le véhicule tracteur (1 ; 1' ; 1"), par l'intermédiaire de la première interface (14 ; 14' ; 14"), le composant de système d'entraînement (4 ; 4' ; 4" ; 4"') dans l'autre remorque pour véhicule (2'"), par l'intermédiaire de la seconde interface (14"'), l'accumulateur d'énergie (15, 16 ; 15', 16' ; 15" ; 16" ; 15"' ; 16"') dans la remorque pour véhicule (2 ; 2' ; 2" ; 2"') et/ou le groupe électrique (20 ; 20' ; 20" ; 20"') dans la remorque pour véhicule (2 ; 2' ; 2" ; 2"').

2. Remorque pour véhicule (2 ; 2' ; 2" ; 2"') selon la revendication 1, **caractérisée en ce que** l'accumulateur d'énergie électrique (15, 16 ; 15', 16' ; 15", 16" ; 15"', 16"') est un accumulateur rechargeable.

3. Remorque pour véhicule (2 ; 2' ; 2" ; 2"') selon la revendication 2, **caractérisée en ce que**
a) l'accumulateur d'énergie (15, 16 ; 15', 16' ; 15", 16" ; 15", 16"') intégré dans la remorque pour véhicule (2 ; 2' ; 2" ; 2"') comporte un accumulateur à haute tension (15 ; 15' ; 15" ; 15"') ayant une tension nominale supérieure à 60V, et/ou
b) l'accumulateur d'énergie (15, 16 ; 15', 16' ; 15", 16" ; 15"', 16"') intégré dans la remorque pour véhicule (2 ; 2' ; 2" ; 2"') comporte un accumulateur à basse tension (16 ; 16' ; 16" ; 16"') ayant une tension nominale inférieure à 60V.

4. Remorque pour véhicule (2 ; 2' ; 2" ; 2"') selon l'une des revendications précédentes, **caractérisée en ce que** les composants de système d'entraînement (4 ; 4' ; 4" ; 4"') intégrés dans la remorque pour véhicule (2 ; 2' ; 2" ; 2"') comportent un répartiteur (18 ; 18' ; 18" ; 18'") qui répartit l'énergie électrique entre :
- l'accumulateur à haute tension (15 ; 15' ; 15" ; 15"') dans la remorque pour véhicule (2 ; 2' ; 2" ; 2"'), et/ou
- l'accumulateur à basse tension (16 ; 16' ; 16" ; 16"') dans la remorque pour véhicule (2 ; 2' ; 2" ; 2"').

5. Remorque pour véhicule (2 ; 2' ; 2" ; 2"') selon l'une des revendications précédentes, **caractérisée en ce que** le répartiteur (18 ; 18' ; 18" ; 18"') remplit en outre au moins l'une des fonctions suivantes :
a) surveillance de l'isolation,
b) surveillance de l'interverrouillage.

6. Remorque pour véhicule (2 ; 2' ; 2" ; 2"') selon l'une des revendications précédentes, **caractérisée par** un premier convertisseur de tension continue (17 ; 17' ; 17") entre l'accumulateur d'énergie (15, 16 ; 15', 16' ; 15", 16" ; 15"', 16"') et la première interface (14 ; 14' ; 14"), en particulier entre l'accumulateur d'énergie (15, 16 ; 15', 16' ; 15", 16" ; 15"', 16''') et le répartiteur (18 ; 18' ; 18" ; 18"').

7. Remorque pour véhicule (2 ; 2' ; 2" ; 2"') selon la revendication 6, **caractérisée en ce que**
a) le premier convertisseur de tension continue (17 ; 17' ; 17" ; 17"') est disposé entre le répartiteur (18 ; 18' ; 18") et l'accumulateur à haute tension (15 ; 15' ; 15" ; 15"'), et
b) un second convertisseur de tension continue (19 ; 19' ; 19" ; 19"') est disposé entre le répartiteur (18 ; 18' ; 18" ; 18"') et l'accumulateur à basse tension (16 ; 16' ; 16" ; 16"').

8. Remorque pour véhicule (2 ; 2' ; 2" ; 2"') selon l'une des revendications précédentes, **caractérisée en ce que** le groupe électrique (20 ; 20' ; 20" ; 20"') est un moteur électrique destiné à entraîner un compresseur frigorifique, un fond coulissant ou un hayon élévateur.

9. Remorque pour véhicule (2 ; 2' ; 2" ; 2"') selon la revendication 8, **caractérisée par** un onduleur (21 ; 21' ; 21" ; 21'") destiné à alimenter le groupe électrique (20 ; 20' ; 20" ; 20"') en courant alternatif.

10. Remorque pour véhicule (2 ; 2' ; 2" ; 2"') selon l'une des revendications précédentes, **caractérisée par** une unité de commande (22 ; 22' ; 22") intégrée dans la remorque pour véhicule (2 ; 2' ; 2" ; 2"') pour de commander
- la charge de l'accumulateur d'énergie (15, 16 ; 15', 16' ; 15", 16" ; 15"', 16"') intégré dans la remorque pour véhicule (2 ; 2' ; 2" ; 2"'),
- la décharge de l'accumulateur d'énergie (15, 16 ; 15', 16' ; 15", 16" ; 15"', 16'"), intégré dans la remorque pour véhicule (2 ; 2' ; 2" ; 2"'),
- le flux d'énergie à travers la première interface (14 ; 14' ; 14"),
- le flux d'énergie à travers la seconde interface (14"'),
- du premier convertisseur de tension continue (17 ; 17' ; 17" ; 17'"),
- le second convertisseur de tension continue (19 ; 19' ; 19" ; 19"'), et/ou
- l'onduleur (21 ; 21' ; 21" ; 21"').

11. Attelage de véhicules comportant
a) un véhicule tracteur (1 ; 1' ; 1") comportant un système d'entraînement électrique (3 ; 3' ; 3") pour entraîner le véhicule tracteur (1 ; 1' ; 1"), et
b) au moins une remorque pour véhicule (2 ; 2' ; 2" ; 2"') selon l'une des revendications précédentes, dans lequel la remorque pour véhicule (2 ; 2' ; 2" ; 2"') est couplée mécaniquement au véhicule tracteur (1 ; 1' ; 1") tandis que le système d'entraînement électrique (3 ; 3' ; 3") du véhicule tracteur (1 ; 1' ; 1") est relié électriquement au composant de système d'entraînement (4 ; 4' ; 4" ; 4"') dans la remorque pour véhicule (2 ; 2' ; 2" ; 2"').

12. Attelage de véhicules selon la revendication 11, **caractérisé en ce que**
a) l'unité de commande (22 ; 22' ; 22" ; 22"') dans la remorque pour véhicule (2 ; 2' ; 2" ; 2"') commande la gestion de l'énergie des composants de système d'entraînement électriques (4 ; 4' ; 4" ; 4"') dans la remorque pour véhicule (2 ; 2' ; 2' ; 2"'), et
b) le véhicule tracteur (1 ; 1' ; 1") possède sa propre unité de commande (13 ; 13' ; 13") qui est reliée par l'intermédiaire de la première interface (14 ; 14' ; 14") à l'unité de commande (22 ; 22' ; 22" ; 22"') dans la remorque pour véhicule (2 ; 2' ; 2" ; 2"'), et
c) l'unité de commande (13 ; 13' ; 13") dans le véhicule tracteur (1 ; 1' ; 1") commande la gestion de l'énergie du système d'entraînement électrique (3 ; 3' ; 3") du véhicule tracteur (1 ; 1' ; 1"), et
d) l'unité de commande (13 ; 13' ; 13") dans le véhicule tracteur (1 ; 1' ; 1") commande l'unité de commande (22 ; 22' ; 22" ; 22"') en tant qu'unité de commande maîtresse commande, dans la remorque pour véhicule (2 ; 2' ; 2" ; 2'"), qui fonctionne en tant qu'unité de commande esclave.

13. Attelage de véhicules selon la revendication 12, **caractérisé en ce que** le véhicule tracteur (1 ; 1' ; 1") comporte une unité de commande (13 ; 13' ; 13") qui est reliée par l'intermédiaire de la première interface (14 ; 14' ; 14") aux composants de système d'entraînement (4 ; 4' ; 4" ; 4"') dans la remorque pour véhicule (2 ; 2' ; 2" ; 2"') et commande la gestion de l'énergie des composants de système d'entraînement (4 ; 4' ; 4" ; 4"') dans la remorque pour véhicule (2 ; 2' ; 2" ; 2"').

14. Attelage de véhicules selon l'une des revendications 11 à 13, **caractérisé en ce que**
a) le système d'entraînement électrique (3 ; 3' ; 3") du véhicule tracteur (1 ; 1' ; 1") comporte un entraînement hybride comprenant un moteur à combustion interne (5 ; 5") et un moteur électrique (6 ; 6"), ou
b) le système d'entraînement électrique (3') du véhicule tracteur (1') comporte un entraînement tout électrique comprenant un moteur électrique (6') mais sans moteur à combustion interne.

15. Attelage de véhicules selon l'une des revendications 11 à 14, **caractérisé en ce que** l'accumulateur d'énergie (15, 16 ; 15', 16' ; 15", 16" ; 15"', 16"') dans la remorque pour véhicule (2 ; 2' ; 2" ; 2"') présente une capacité d'au moins 10 %, 20 %, 50 % ou 100 % de la capacité d'un accumulateur d'énergie (12 ; 12' ; 12") du système d'entraînement électrique (3 ; 3' ; 3") dans le véhicule tracteur (1 ; 1' ; 1").
